# EUROPÄISCHE PATENTANMELDUNG

(11) **EP 2 975 395 A1**
(43) Veröffentlichungstag der Anmeldung: **20.01.2016**
(21) Anmeldenummer: 15173755.8
(22) Anmeldetag: 25.06.2015
(51) Int. Cl.: G01N 29/02, G01B 17/02, G01N 29/22, G01N 17/00

(54) **DETEKTION UND SCHICHTDICKENBESTIMMUNG VON KALK- UND/ODER BIOFILMEN IN EINEM HAUSHALTSGERÄT**

(30) Priorität: 17.07.2014 DE 102014110034
(71) Anmelder: Miele & Cie. KG, 33332 Gütersloh (DE)
(72) Erfinder: Kaiser, Ingo, 33106 Paderborn (DE); Haße, Julian, 33104 Paderborn (DE)

(57) **Zusammenfassung**

Die vorliegende Erfindung betrifft ein Haushaltsgerät, mit einem von einem Fluid, insbesondere einer Flüssigkeit, durchflossenen Bereich, sowie mit einer Gerätesteuerung, die zur Erkennung eines Ablagerungs- charakteristischen Wertes ausgebildet ist, wobei das Haushaltsgerät eine Messeinrichtung umfasst, die zur Erfassung des Ablagerungs- charakteristischen Wertes mittels einer akustischen Oberflächenwelle ausgelegt ist. Die vorliegende Erfindung betrifft weiterhin ein Verfahren zum Reinigen eines solchen Haushaltsgerätes.

## Beschreibung

### Stand der Technik

Die vorliegende Erfindung betrifft ein Haushaltsgerät, das einen von einem Fluid durchflossenen Bereich aufweist, sowie eine Messeinrichtung, die zur Erfassung einer Ablagerung in dem von dem Fluid durchflossenen Bereich vorgesehen ist. Die vorliegende Erfindung betrifft weiterhin ein Verfahren zur Reinigung eines solchen Haushaltsgerätes sowie die Verwendung von akustischen Oberflächenwellen zur Erfassung von Ablagerungen in einem von einem Fluid durchflossenen Bereich eines Haushaltsgerätes.

Eine Vielzahl Haushaltsgeräte werden mit Flüssigkeiten wie beispielsweise Wasser, Reinigungsflüssigkeiten, Kaffee, Milch oder anderen Getränken betrieben. Bleiben solche Geräte über einen längeren Zeitraum ungenutzt, bilden sich in den von den Flüssigkeiten durchflossenen Bereichen Ablagerungen und Biofilme, die Keime enthalten. Solche Keime lagern sich an Oberflächen ab und vermehren sich, bis der Biofilm eine geschlossene Schleimschicht bildet. Die Schleimschicht schützt die Keime vor äußeren Einflüssen. Spätestens ab diesem Zeitpunkt ist die Verkeimung für den Kunden in Form von Gerüchen unangenehm und kann sogar gesundheitsschädlich sein.

Die Nutzung von Wasser in einem Haushaltsgerät führt, insbesondere an Heizkörpern, zu Kalkablagerungen. Diese wirken thermisch isolierend. Dadurch müssen die Heizkörper wärmer und/oder länger betrieben werden, so dass der Energieverbrauch des Haushaltsgerätes mit zunehmenden Kalkablagerungen steigt.

Herkömmlich werden Reinigungszyklen turnusmäßig zeit- und/oder zyklengesteuert durchgeführt. Durch zu häufiges oder zu seltenes Reinigen können die Haushaltsgeräte jedoch Schaden nehmen.

Für Backöfen ist eine Erfassung der Verkalkung der Dampfeinheit mithilfe einer Temperaturdifferenzmessung und Auswertung bekannt.

Mit einer Temperaturdifferenzmessung ist eine Verkeimung und sind Biofilme und ihre Vorstufen, insbesondere Fette und/oder Proteine, aber nicht erfassbar. Außerdem sind damit auch keine Kalkablagerungen erfassbar, mit einer Schichtdicke, die kleiner als 50µm beträgt.

### Offenbarung der Erfindung

Aufgabe der vorliegenden Erfindung ist es, ein mit einer Flüssigkeit betriebenes Haushaltsgerät zu schaffen, dessen von der Flüssigkeit durchflossene Bereiche bedarfsgerecht gereinigt werden, wobei Ablagerungen, insbesondere Kalkablagerungen und/oder Biofilme sowie ihre Vorstufen, frühzeitig erkannt werden.

Zur Lösung der Aufgabe wird ein Haushaltsgerät geschaffen, das einen von einem Fluid durchflossenen Bereich aufweist. Das Haushaltsgerät weist eine Gerätesteuerung auf, die zur Erkennung eines Ablagerungs- charakteristischen Wertes einer Ablagerung ausgebildet ist. Das Haushaltsgerät weist zudem eine Messeinrichtung auf.

Es zeichnet sich dadurch aus, dass die Messeinrichtung zur Erfassung des Ablagerungs- charakteristischen Wertes mittels einer akustischen Oberflächenwelle ausgelegt ist.

Eine akustische Oberflächenwelle (AOW oder SAW, surface acoustic wave) ist eine mechanische Körperschall- Welle. Sie breitet sich auf einer Oberfläche eines Festkörpers planar aus, und zwar im Festkörper als Longitudinal- und/oder Transversalwelle, in einem angrenzenden Fluid als Longitudinalwelle.

Die Druckschrift WO 2010/034715 A2 offenbart ein Verfahren, mit dem eine Beschichtung, die an einer Struktur angeordnet ist, sowie Eigenschaften der Beschichtung, mittels einer akustischen Oberflächenwelle erfassbar ist.

Es hat sich gezeigt, dass eine akustische Oberflächenwelle auch eine Erkennung einer Ablagerung, wie beispielsweise einer Kalkablagerung, eines Biofilms und/oder seiner Vorstufen, ermöglicht. Zudem hat sich gezeigt, dass die Erkennung einer solchen Ablagerung mit Hilfe einer akustischen Oberflächenwelle sehr frühzeitig möglich ist, sogar dann, wenn die Schichtdicke der Ablagerung noch kleiner als 50µm beträgt.

Im Folgenden werden Kalkablagerungen, Biofilme und ihre Vorstufen als Ablagerungen bezeichnet.

Die Messeinrichtung weist einen Sender und zumindest einen Empfänger auf. Der Sender und der Empfänger sind bevorzugt an einer Struktur angeordnet, die den von dem Fluid durchflossenen Bereich fluiddicht begrenzt. Der Sender ist zum Versenden der akustischen Oberflächenwelle, und der Empfänger zum Empfangen der über die Struktur und/oder das Fluid übertragenen Oberflächenwelle und/oder ihrer Reflexionen vorgesehen. Die vom Empfänger empfangene übertragene Oberflächenwelle und/oder ihre Reflexionen wird im Folgenden als erste Reflexionswelle bezeichnet.

In Abhängigkeit von den Eigenschaften der Struktur und/oder des Fluids und/oder einer an der Struktur angeordneten Ablagerung ändern sich die Amplitude, Frequenz und/oder Phasenlage der akustischen Oberflächenwelle bei der Übertragung. Die übertragene Oberflächenwelle und/oder ihre Reflexionen weist daher eine andere Amplitude, Frequenz und/oder Phasenlage auf als die gesendete akustische Oberflächenwelle.

In einer weiteren bevorzugten Ausführungsform weist die Messeinrichtung den Sender, den Empfänger und einen zweiten und/oder weitere Empfänger auf. Vorzugsweise ist der zweite und/oder die weiteren Empfänger gegenüber dem Sender und dem Empfänger in einer Umfangsrichtung der Struktur beabstandet angeordnet ist. Besonders bevorzugt sind der Sender und der Empfänger an einer ersten Seite der Struktur, und der zweite Empfänger an einer der ersten Seite gegenüberliegenden zweiten Seite der Struktur angeordnet. Zudem ist es bevorzugt, dass der zweite und/oder die weiteren Empfänger in Flussrichtung hinter dem Sender aber vor dem Empfänger angeordnet sind. Diese Anordnung ermöglicht den Empfang einer zweiten und/oder weiterer Reflexionswellen mit dem zweiten und/oder den weiteren Empfängern, die sich jeweils aus der vom zweiten und/oder den weiteren Empfängern empfangenen übertragenen Oberflächenwelle und/oder ihren Reflexionen zusammensetzt. Die Berücksichtigung des zweiten und/oder weiterer Reflexionswerte ermöglicht eine genauere Erfassung des Ablagerungs- charakteristischen Wertes.

Um die Genauigkeit der Erkennung noch weiter zu erhöhen, ist es zudem bevorzugt, dass die Messeinrichtung zum Senden und Empfangen einer oder mehrerer weiterer akustischer Oberflächenwellen anderer Amplitude, Frequenz und/oder Phasenlage ausgelegt ist.

In einer bevorzugten Ausführungsform ist die Struktur ein Behälter oder eine Leitung, der oder die von dem Fluid durchflossen ist, insbesondere ein Vorrats-, Misch-, Laugen-, Reinigungs-, Getränke- oder Entsorgungsbehälter, ein Zulauf-/ Zufluss-, Ablauf-/Abfluss-, oder eine Rohr-, Schlauch-, Heiz- oder Kühlleitung. Dabei ist es bevorzugt, dass der Sender und der Empfänger in einer Flussrichtung des Fluides voneinander beabstandet an der Struktur angeordnet sind.

Dabei ist ein Abstand zwischen dem Sender und dem oder den Empfängern abhängig von dem Material der Struktur und/oder von dem vom Fluid durchflossenen bzw. in Kontakt tretendem Wandbereich, insbesondere seiner Wanddicke oder Rohrdurchmesser, beim Einsatz an Rohren. Vorzugsweise beträgt der Abstand etwa 2 - 20 cm, besonders bevorzugt etwa 5 - 12 cm.

In einer bevorzugten Ausführungsform ist das Fluid eine Flüssigkeit, beispielsweise Wasser, ein Getränke wie Milch, Kaffee oder Tee, oder ein Reinigungsmittel. Als Fluid kommt prinzipiell aber auch ein Gas in Frage, insbesondere (verunreinigte) Luft.

Es ist bevorzugt, dass die Struktur aus einem insbesondere korrosionsbeständigen Feststoff gebildet ist, wie beispielsweise aus Edelstahl. Es eignet sich aber auch eine anders gefertigte Struktur, beispielsweise aus einer Keramik, oder aus einem Kunststoff, insbesondere einem harten Kunststoff wie beispielsweise HD-PE (high density Polyethylen), PP (Polypropylen) oder einem faserverstärkten Kunststoff.

Bevorzugt sind der Sender und der Empfänger an einer dem Fluid abgewandten Fläche der Struktur angeordnet. Dadurch werden weder der Sender noch der Empfänger vom Fluid umflossen, so dass sie nicht vor dem Fluid geschützt werden müssen. Die Messeinrichtung ist daher sehr fehlerunempfindlich. Zudem beeinflussen oder behindern der Sender und der Empfänger den Fluidfluss nicht.

In einer bevorzugten Ausführungsform ist die Gerätesteuerung dazu ausgelegt, den vom Fluid durchflossenen Bereich zu reinigen, wenn eine Differenz zwischen einem Referenzwert und dem mit der Messeinrichtung erfassten Ablagerungscharakteristischen Wert einen Grenzwert überschreitet. Die Nutzung des Differenzwertes hat den Vorteil, dass aufwändige Rechenalgorithmen vermieden werden.

Da die Messeinrichtung eine sehr frühzeitige Erkennung der Ablagerung ermöglicht, erfolgt die Reinigung des vom Fluid durchflossenen Bereiches bedarfsgerecht. Eine Einstellung/Wahl des Grenzwertes ermöglicht dabei eine häufigere Reinigung bei einem keimungsgefährdeten vom Fluid durchflossenen Bereich gegenüber einem weniger keimungsgefährdeten vom Fluid durchflossenen Bereich.

In einer ersten bevorzugten Ausführungsform ist der Referenzwert ein mit der Messvorrichtung erfasster Ablagerungs- charakteristischer Wert bei Ablagerungs- freier Struktur. Besonders bevorzugt ist der Referenzwert ein Initialisierungswert, insbesondere bei Erstinbetriebnahme des Haushaltsgerätes oder bei einer Neuinbetriebnahme des Haushaltsgerätes, beispielsweise nach einer Reparatur oder Inspektion.

In einer ebenfalls bevorzugten Ausführungsform ist der Referenzwert ein Standard- Referenzwert, der, beispielsweise Geräte- und/oder Modell- abhängig, in Testreihen vorab ermittelt wird.

In einer bevorzugten Ausführungsform ist der Ablagerungs- charakteristische Wert ein Schichtdicken- charakteristischer Wert, insbesondere die Schichtdicke der Ablagerung. Es hat sich aber gezeigt, dass auch andere Eigenschaften der Ablagerung erfassbar sind, beispielsweise ein den Grad der Verkeimung charakterisierender Wert.

Weiterhin bevorzugt weist die Gerätesteuerung einen Datenspeicher auf, in dem der Referenzwert hinterlegt ist, insbesondere einen Langzeitdatenspeicher. Anstelle einer automatischen Reinigung oder zudem ist es in einer Ausführungsform ebenfalls bevorzugt, dass die Gerätesteuerung dazu ausgelegt ist, einen Bediener auf eine notwendige Reinigung hinzuweisen. Der Hinweis erfolgt bevorzugt bei Überschreiten des Grenzwertes. Es ist aber ebenfalls bevorzugt, den Bediener auf ein in Kürze erforderliche/erfolgende Reinigung hinzuweisen, wenn der Grenzwert noch nicht überschritten ist.

Dafür weist das Haushaltsgerät bevorzugt ein oder mehrere Hinweismittel zum Hinweisen auf die notwendige Reinigung auf. Das Hinweismittel ist bevorzugt eine Zeichenfolge oder ein Symbol in einem Display oder eine Lampe, insbesondere eine LED.

Bevorzugt ist die Gerätesteuerung zudem dazu ausgelegt, die Häufigkeit der Reinigung in Abhängigkeit von dem Ablagerungs- charakteristischen Wert zu steuern oder sogar zu verändern. Dafür misst die Messeinrichtung den Ablagerungs- charakteristischen Wert bevorzugt in definierten zeitlichen Abständen, beispielsweise einmal täglich oder einmal wöchentlich, und/oder in Abhängigkeit von der Häufigkeit und/oder der Dauer der Benutzung des Haushaltsgerätes, beispielsweise bei jeder Inbetriebnahme oder alle zwei oder mehr Inbetriebnahmen, oder jeweils nach einigen Betriebsstunden oder Betriebstagen. Auch dadurch kann die Reinigung von besonders keimanfälligen Bereichen häufiger erfolgen, als die Reinigung von weniger keimanfälligen Bereichen.

Das Haushaltsgerät ist bevorzugt eine Waschmaschine, ein Wäschetrockner, ein Waschtrockner, eine Geschirrspülmaschine, ein Heißgetränkeautomat, insbesondere einen Kaffee- (voll-) Automat, ein Bügelsystem, insbesondere mit einem Dampferzeuger, Backofen oder Dampfgarer mit einem Dampferzeuger oder ein Bodenreinigungssystem, insbesondere ein Nassstaubsauger. Bevorzugte, vom Fluid durchflossene Bereiche sind:
- Bei der Waschmaschine ein Laugenbehälter, eine Ablufteinrichtung (schmutzanfällig), ein Einspülkasten (Waschmittelanbackungen)
- Bei der Geschirrspülmaschine ein Sammeltopf (Fettablagerungen), ein Speicherbehälter, eine Ablaufeinrichtung (schmutzanfällig, Biofilm)
- Bei dem Heißgetränkeautomaten ein Wasserbehälter (Biofilm), ein Milchbehälter (Fettfilm, Eiweißablagerung), ein Leitungssystem (Verkalkung), ein Boiler (Verkalkung)
- Bei dem Bügelsystem, Backofen oder Dampfgarer ein Dampferzeuger, insbesondere ein Boiler (Verkalkung)

Die Aufgabe wird weiterhin gelöst mit einem Verfahren zur Reinigung eines solchen Haushaltsgerätes, bei dem:
- der Ablagerungs- charakteristische Wert auf der Struktur des von dem Fluid durchflossenen Bereiches des Haushaltsgerätes mit der Messeinrichtung erfasst wird, und
- Der von dem Fluid durchflossene Bereich gereinigt wird, wenn eine Differenz zwischen einem Referenzwert und dem mit der Messeinrichtung erfassten Ablagerungs- charakteristischen Wert einen Grenzwert überschreitet.

Da der vom Fluid durchflossene Bereich nur bei Überschreiten des Grenzwertes gereinigt wird, ist das Reinigen in Abhängigkeit von dem eingestellten Grenzwert bedarfsgerecht möglich. Da die Messung des Ablagerungs- charakteristischen Wertes mit der akustischen Oberflächenwelle auch eine Erfassung einer Ablagerung ermöglicht, deren Schichtdicke kleiner als 50µm beträgt, kann der vom Fluid durchflossene Bereich bereits gereinigt werden, wenn der vom Fluid durchflossene Bereich noch keine oder sehr wenige Keime aufweist.

Um sicher zu stellen, dass der vom Fluid durchflossene Bereich häufig genug gereinigt wird, damit er noch keine oder nur sehr wenige Keime aufweist, ist es bevorzugt, dass die Messeinrichtung den Ablagerungs- charakteristischen
- in definierten zeitlichen Abständen, und/oder
- in Abhängigkeit von der Häufigkeit der Benutzung des Haushaltsgerätes, und/oder
- in Abhängigkeit von einer Betriebsdauer des Haushaltsgerätes
erfasst.

Die Aufgabe wird weiterhin gelöst, indem für die Erfassung einer Ablagerung in einem von einer Flüssigkeit durchflossenen Bereich in einem Haushaltsgerät eine akustische Oberflächenwelle verwendet wird.

Im Folgenden wird die Erfindung anhand von Figuren beschrieben. Die Figuren sind lediglich beispielhaft und schränken den allgemeinen Erfindungsgedanken nicht ein.
- Fig. 1: zeigt in a) eine an einer Struktur angeordnete Messeinrichtung mit einem Sender und einem Empfänger, und in b) eine an der Struktur angeordnete Messeinrichtung mit dem Sender, dem Empfänger und einem zweiten Empfänger; und
- Fig. 2: zeigt in a) eine Geschirrspülmaschine, in b) einen Heißgetränkeautomaten, in c) einen funktionalen Aufbau des Heißgetränkeautomaten, in d) und e) eine Waschmaschine und in f) einen Laugenbehälter einer Waschmaschine, jeweils mit einer solchen Messeinrichtung.

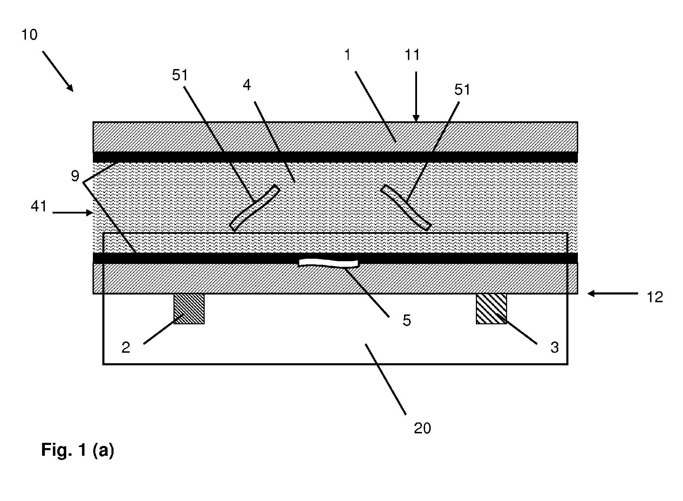

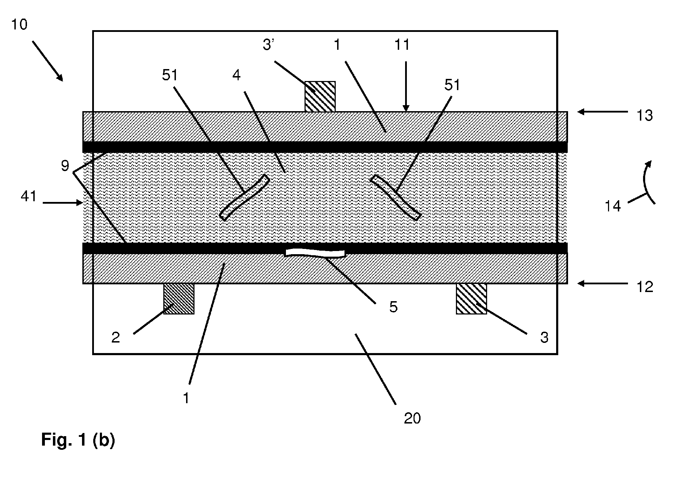

Die Fig. 1 (a) und (b) zeigen jeweils einen von einem Fluid 4 durchflossenen Bereich 10 mit einer Messeinrichtung 20 nach dem Stand der Technik.

In der Fig. 1 (a) umfasst die Messeinrichtung 20 einen Sender 2 zum Senden einer akustischen Oberflächenwelle 5, sowie einen Empfänger 3 zum Empfangen der übertragenen Oberflächenwelle und/oder ihrer Reflexionen. Die akustische Oberflächenwelle 5 sowie ihre Reflexionen sind jeweils schematisch durch eine Wellenform dargestellt.

Der Sender 2 und der Empfänger 3 sind an einer Struktur 1 angeordnet, die den vom dem Fluid 4 durchflossenen Bereich 10 räumlich begrenzt. Die Struktur 1 ist beispielsweise eine Leitung, ein Rohr, ein Schlauch oder ein Behälter.

Sowohl der Sender 2 als auch der Empfänger 3 sind an einer von dem Fluid abgewandten Fläche 11 der Struktur 1 angeordnet. Dadurch behindern der Sender 2 und der Empfänger 3 den Fluidfluss nicht. Zudem kommen sie nicht in Kontakt mit dem Fluid 4. Vorzugsweise sind sie einzeln oder als Baueinheit an die Struktur 1 kontaktschlüssig angeklebt oder angeklemmt.

Sie sind beide an einer ersten Seite 12 der Struktur 1 angeordnet und in einer Fluidflussrichtung 41 voneinander beabstandet. Da die akustische Oberflächenwelle 5 vom Sender 2 über die Struktur 1 und/oder das Fluid 4 zum Empfänger 3 übertragen wird, unterscheidet sich die gesendete akustische Oberflächenwelle 5 von der mit dem Empfänger 3 empfangenen übertragenen Oberflächenwelle und/oder ihrer Reflexionen in Bezug auf ihre Amplitude, ihre Frequenz und ihre Phasenlage. Im Folgenden werden die vom Empfänger 3 empfangene übertragene Oberflächenwelle und/oder ihre Reflexionen als erste Reflexionswelle bezeichnet. Die Amplitude, die Frequenz und/oder die Phasenlage der ersten Reflexionswelle ist dabei abhängig von der Struktur 1, dem Fluid 4 und/oder den räumlichen Verhältnissen der Anordnung.

Es hat sich gezeigt, dass eine an der Struktur 1 vorhandene Ablagerung 9 die erste Reflexionswelle verändert. Die Ablagerung 9 ist hier an der dem Fluid 4 zugewanden Seite der Struktur 1 gezeigt. Dabei ist die Veränderung von den Eigenschaften der Ablagerung 9, beispielsweise Fettablagerung oder Kalkablagerung und/oder Schichtdicke der Ablagerung 9, abhängig. Die von dem Empfänger 3 empfangene Reflexionswelle ist daher ein Maß für die Eigenschaften der Ablagerung 9.

Solche Eigenschaften der Ablagerung 9 sind beispielsweise ihre Schichtdicke oder ihre Dichte. Es hat sich gezeigt, dass eine Kalkablagerung eine Reflexionswelle anders verändert, als eine Fett- oder eine Eiweißablagerung.

Die in der Fig. 1 (b) gezeigte Messeinrichtung 20 weist neben dem Sender 2 und dem Empfänger 3 einen zweiten Empfänger 3' auf. Der zweite Empfänger 3' ist zu dem Sender 2 und dem Empfänger 3 in einer Umfangsrichtung 14 der Struktur 1 beabstandet angeordnet. Er ist an einer der ersten Seite 12 gegenüber liegenden zweiten Seite 13 der Struktur 1, und zudem in Fluidflussrichtung 41 zwischen dem Sender 2 und dem Empfänger 3 angeordnet. Auch der zweite Empfänger 3' ist an der dem Fluid abgewandten Seite 11 der Struktur 1 angeordnet, um den Fluidfluss nicht zu behindern.

Auch die Amplitude, Frequenz und/oder Phasenlage der zweiten Reflexionswelle ist abhängig von der Struktur 1, dem Fluid 4 und/oder den räumlichen Verhältnissen der Anordnung, wobei die an der Struktur 1 vorhandene Ablagerung 9 auch die zweite Reflexionswelle 51 verändert. Die zweite Reflexionswelle 51 ist daher ebenfalls ein Maß für die Eigenschaften der Ablagerung 9.

Der zweite Empfänger 3' ermöglicht daher eine genauere Bestimmung der Eigenschaften der Ablagerung 9 und/oder anderer Eigenschaften der Ablagerung 9.

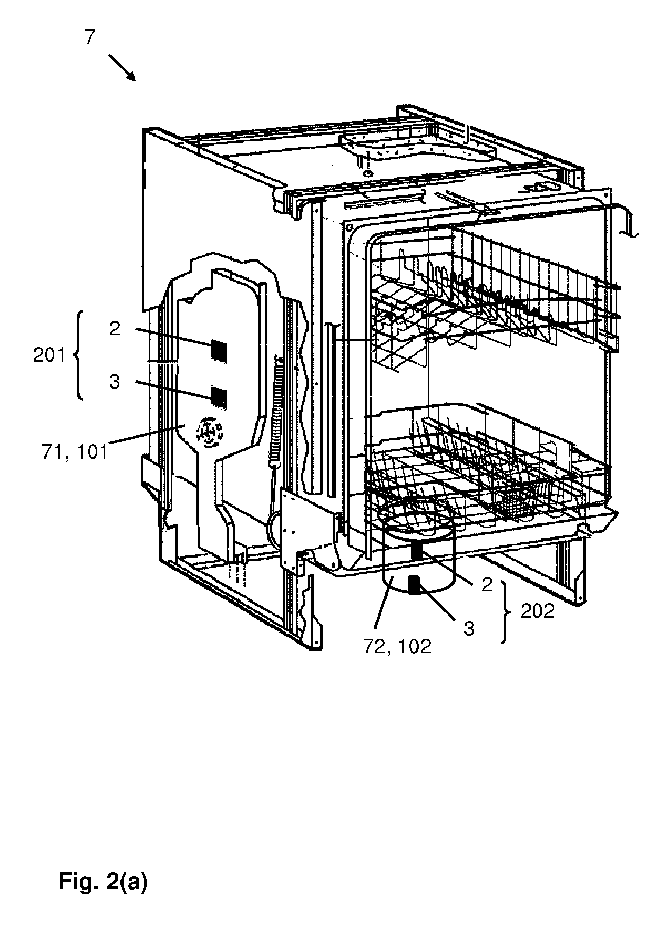

Fig. 2 (a) zeigt ein erfindungsgemäßes Haushaltsgerät, und zwar hier eine Geschirrspülmaschine 7. Im Rahmen der Fig. 2 (a) werden die Begriffe Haushaltsgerät und Geschirrspülmaschine 7 synonym verwendet. Die Geschirrspülmaschine 7 weist mehrere Messeinrichtungen 201, 202 auf, die jeweils zur Erfassung eines Ablagerungs- charakteristischen Wertes mittels einer akustischen Oberflächenwelle 5 ausgelegt sind, und die jeweils einen Sender 2 und einen Empfänger 3 umfassen. Die Sender und Empfänger sind jeweils an einer ersten (Außen-) Seite der vom Fluid durchflossenen Bereiche 101, 102 angeordnet.

Die Geschirrspülmaschine 7 weist einen Spülwasser- Speicherbehälter 71 auf. An dem Spülwasser- Speicherbehälter 71 ist die erste Messeinrichtung 201 angeordnet. Der Spülwasser- Speicherbehälter 71 ist hier daher ein erster von dem Fluid (nicht gezeigt), nämlich dem Spülwasser, durchflossener Bereich 101. Er ist für Kalk- und/oder Spülmittelablagerungen anfällig.

Zudem weist die Geschirrspülmaschine 7 einen Sammeltopf 72 mit einer Umwälzpumpe auf. Der Sammeltopf 72 ist ein zweiter vom Fluid durchflossener Bereich 102. Am Sammeltopf 72 ist eine zweite Messeinrichtung 202 angeordnet. Er ist vor allem für Fettablagerungen anfällig.

Weiterhin weist die Geschirrspülmaschine 7 eine Ablaufeinrichtung (nicht gezeigt) für Abwasser (nicht gezeigt) auf, an der eine dritte Messeinrichtung (nicht gezeigt) angeordnet ist. Die Ablaufeinrichtung ist schmutzanfällig. Dort können daher Biofilme entstehen und dadurch eine starke Verkeimung verursachen.

Zudem können an weiteren vom Fluid, nämlich Spül- oder Abwasser, durchflossenen Bereichen der Geschirrspülmaschine 7 weitere solche Messeinrichtungen (nicht gezeigt) vorgesehen sein.

Die Geschirrspülmaschine 7 weist eine Gerätesteuerung (nicht dargestellt) auf, die dazu ausgelegt ist, den von dem jeweiligen Fluid durchflossenen Bereich 101, 102 zu reinigen, wenn eine Differenz zwischen einem für den jeweiligen vom Fluid durchflossenen Bereich charakteristischen Referenzwert und dem mit der jeweiligen Messeinrichtung 201, 202 jeweils erfassten Ablagerungs- charakteristischen Wert einen für den jeweiligen vom Fluid durchflossenen Bereich charakteristischen Grenzwert überschreitet. Der Ablagerungs- charakteristische Wert ist dabei bevorzugt ein Schichtdicken- charakteristischer Wert. Bei dieser Ausbildung werden die von dem jeweiligen Fluid durchflossenen Bereiche unabhängig voneinander bedarfsgerecht gereinigt.

Um den (Rechen-) Aufwand für die Gerätesteuerung zu minimieren, ist der Referenzwert ein von der Messeinrichtung 201, 202 erfasster Initialisierungswert bei Erstinbetriebnahme. Es ist bevorzugt, dass der Initialisierungswert zurücksetzbar ist, so dass er, beispielsweise bei einer Neuinbetriebnahme nach einer Reparatur oder Inspektion der Geschirrspülmaschine 7, neu initialisierbar ist.

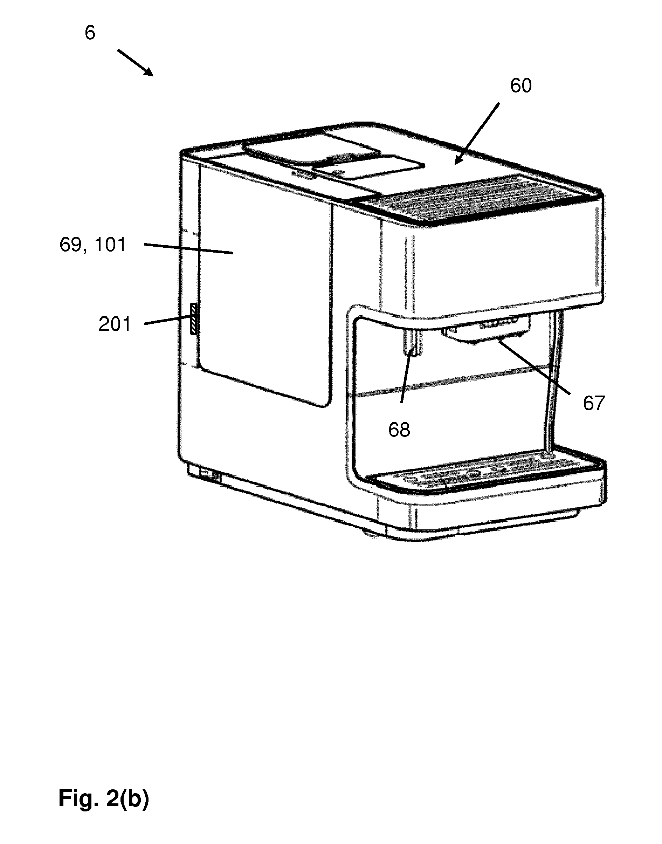

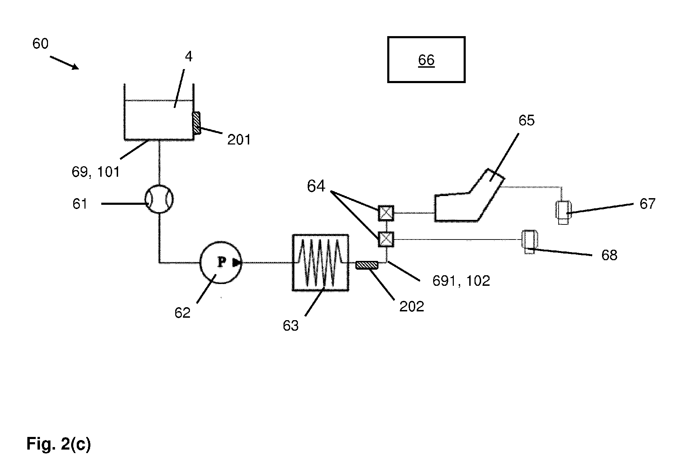

Das in den Fig. 2 (b) und (c) dargestellte Haushaltsgerät ist ein Heißgetränkeautomat 6, und zwar hier ein Kaffeeautomat beziehungsweise ein Kaffeevollautomat. Mit dem Heißgetränkeautomaten 6 sind als Heißgetränk verschiedene Sorten Kaffee (nicht gezeigt) herstellbar. Im Rahmen der Fig. 2 (b) und (c) werden die Begriffe Haushaltsgerät und Heißgetränkeautomat 6 oder Kaffeeautomat synonym verwendet. Auch der Kaffeeautomat 6 weist mehrere Messeinrichtungen 201, 202 auf, die jeweils zur Erfassung eines Ablagerungs- charakteristischen Wertes mittels einer akustischen Oberflächenwelle 5 ausgelegt sind. Fig. 2 (c) zeigt den funktionalen Aufbau des Getränkebereiters 60 des Kaffeeautomaten 6.

Der Kaffeeautomat 1 besitzt einen Wasserbehälter 69 mit Wasser 4. Zum Aufbrühen eines Kaffees (nicht gezeigt) in einem Brühvorgang wird das Wasser 4 über Wasserzuleitungen 691 mithilfe einer Pumpe 62 in eine Brühkammer 65 geleitet. Dabei wird es in einem Durchlauferhitzer 63 erwärmt. Der in den Wasserzuleitungen 691 herrschende Druck kann über einen Dampfauslass 68 reguliert werden. Die in die Brühkammer 65 eingeleitete Menge Wasser 4 wird mit Hilfe eines Flussmeters 61 erfasst und mit Hilfe von Mehrwegventilen 64 begrenzt.

In der Brühkammer 65 wird das heiße Wasser 4, insbesondere unter Druck, durch gemahlene Kaffeebohnen (nicht gezeigt) geleitet und der Kaffee dadurch aufgebrüht. Das heiße Wasser 4 nimmt dabei Partikel der gemahlenen Kaffeebohnen auf und ihren Geschmack an. Durch einen Getränkeauslass 67 wird der Kaffee anschließend ausgelassen.

Die erste Messeinrichtung 201 ist am Wasserbehälter 69 angeordnet. Der Wasserbehälter 69 ist daher der erste vom Wasser 4 durchflossene Bereich 101. Dieser ist anfällig für Biofilme. Die zweite Messeinrichtung 202 ist an den Wasserzuleitungen 691 angeordnet, die anfällig für Kalkablagerungen sind. Die Wasserzuleitungen sind daher der zweite vom Wasser 4 durchflossene Bereich 102. Denkbar ist auch eine dritte Messeinrichtung (nicht gezeigt), die an einem gegebenenfalls vorgesehenen Milchbehälter (nicht gezeigt) angeordnet ist. Ein solcher Milchbehälter ist für Fettfilme und Eiweißablagerungen anfällig. Zudem können weitere solche Messeinrichtungen an anderen von einem Fluid durchflossenen Bereichen, beispielsweise die Milchleitung oder Getränkeauslauf, vorgesehen sein.

Auch der Kaffeeautomat 6 weist eine Gerätesteuerung 66 auf, die dazu ausgelegt ist, die jeweils vom Fluid, nämlich dem Wasser oder der Milch, durchflossenen Bereiche 101, 102 unabhängig voneinander bedarfsgerecht zu reinigen.

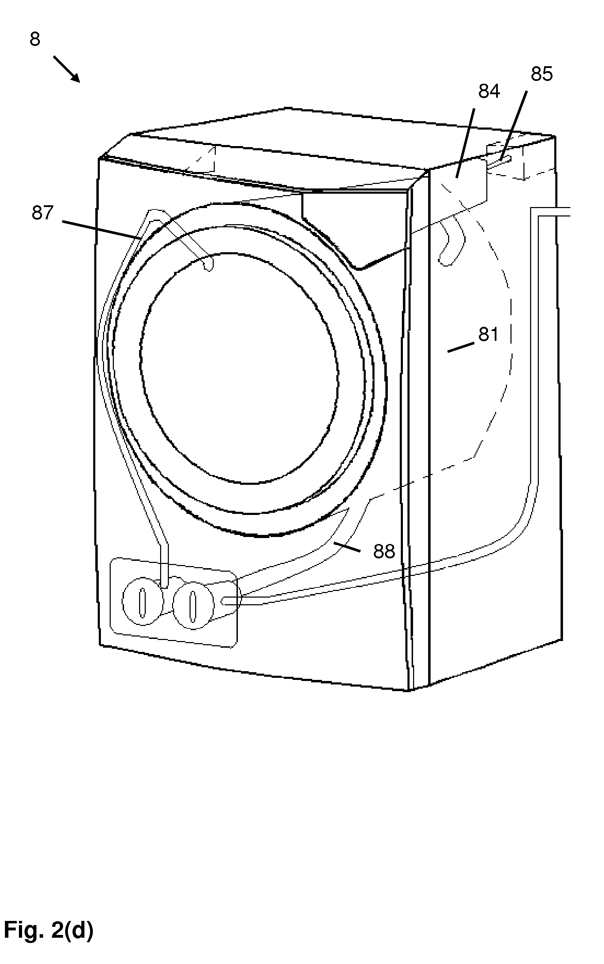

Die Fig. 2 (d) - (f) zeigen als weiteres Beispiel eines erfindungsgemäßen Haushaltsgerätes eine Waschmaschine 8. Eine solche Waschmaschine 8 weist einen Laugenbehälter 81 auf, in dem eine Wäschetrommel 82 zur Aufnahme der zu reinigenden Wäsche 83 angeordnet ist. Die Wäschetrommel 82 ist mit einem Antriebsmotor 861 antreibbar. In den Laugenbehälter 81 ist mit einem Waschmittel versetztes Waschwasser einfüllbar. Dafür weist die Waschmaschine 8 einen Einspülkasten 84 auf, in dem das Waschmittel angeordnet ist. Beim Einspülen wird Wasser durch einen Wassereinlauf 85 in den Einspülkasten 84 geleitet, wobei es mit dem Waschmittel versetzt wird.

Die Waschmaschine 8 weist zudem eine Ablaufeinrichtung 88 auf, durch die das Waschwasser mittels einer Pumpe 89 abpumpbar ist, sowie eine Überlaufschutzeinrichtung 87, durch die überschüssiges Waschwasser in die Ablaufeinrichtung 88 einleitbar ist.

Der Einspülkasten 84 ist anfällig für Waschmittelablagerungen, der Laugenbehälter 81 ist anfällig für Waschmittel- und Kalkablagerungen, und die Ablaufeinrichtung 88 ist schmutzanfällig. Dort können sich daher Biofilme bilden.

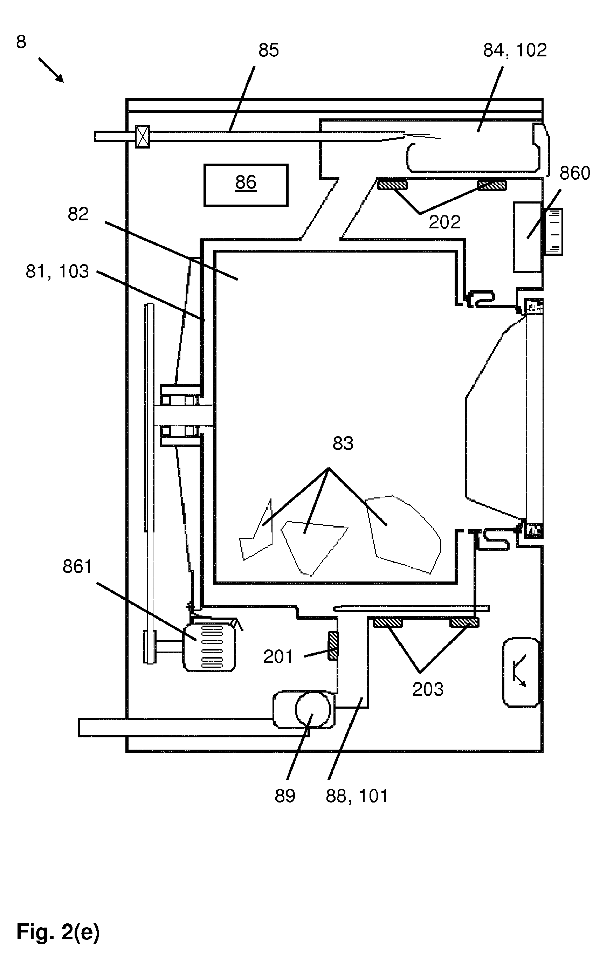

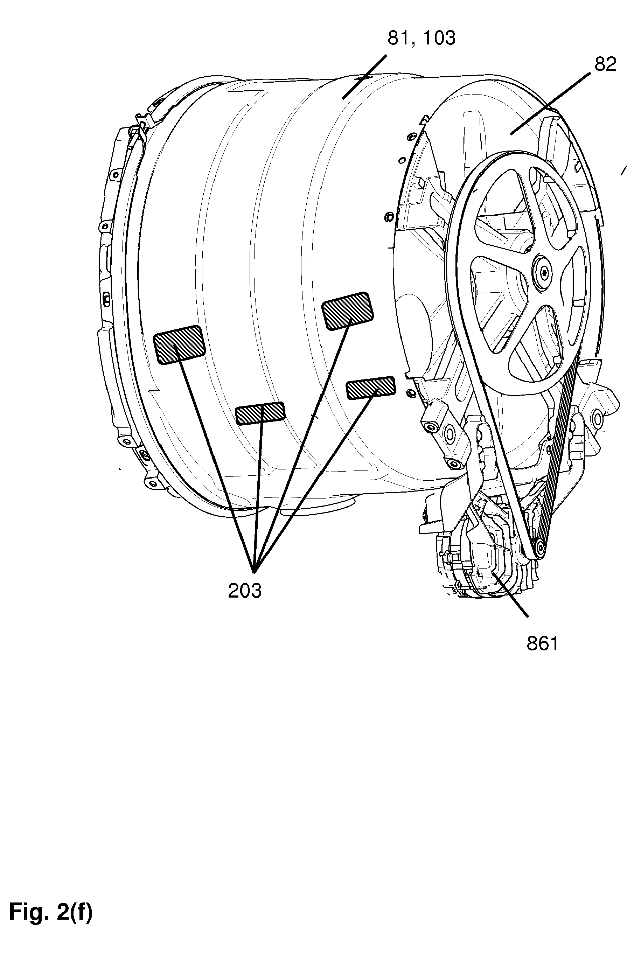

In dem Schnittbild der Fig. 2 (e) sind daher erste, zweite und dritte Messeinrichtungen 201, 202, 203 beispielhaft gezeigt, die an diesen von dem Wasser, Waschwasser oder Abwasser durchflossenen Bereichen 101, 102, 103 angeordnet sind. Fig. 2 (f) zeigt beispielhaft die Anordnung dritter Messeinrichtungen 203, die am Laugenbehälter 81 angeordnet sind. Die Messeinrichtungen 203 können zusätzlich oder alternativ auch an der Rückwand des Laugenbehälters 81 angebracht sein, da dort die Gefahr von Verschmutzungen und Ablagerungen besonders groß ist.

Auch die Waschmaschine 8 weist eine Gerätesteuerung 86 auf, die dazu ausgelegt ist, diese Bereiche 101, 102, 103 unabhängig voneinander bedarfsgerecht zu reinigen, wenn die Differenz zwischen dem für den jeweiligen vom Fluid durchflossenen Bereich 101, 102, 103 charakteristischen Referenzwert und dem mit der jeweiligen Messeinrichtung 201, 202, 203 erfassten Ablagerungs- charakteristischen Wert einen für den jeweiligen vom Fluid durchflossenen Bereich 101, 102, 103 charakteristischen Grenzwert überschreitet.

Bei allen aufgeführten Beispielen ist der Referenzwert bevorzugt ein zurücksetzbarer Initialisierungswert. Zudem wird die Erfassung des Ablagerungs- charakteristischen Wertes mit den Messeinrichtungen bei allen aufgeführten Beispielen bevorzugt jeweils in Abhängigkeit von der zu erwartenden Anfälligkeit für Ablagerungen, dem zu erwartenden Grad der Verkeimung und/oder dem Ablagerungstyp (z. B. Verkalkung, Fettablagerung, Biofilm) eingestellt.

### Bezugszeichenliste

- 1: Struktur, Behälter, (Rohr-) Leitung
- 10: Vom Fluid durchflossener Bereich
- 101, 102, 103: Erster, zweiter, dritter vom Fluid durchflossener Bereich
- 11: Fläche
- 12: Erste Seite
- 13: Zweite Seite
- 14: Umfangsrichtung
- 2: Sender
- 20: Messeinrichtung
- 201, 202, 203: Erste Messeinrichtung, zweite / dritte Messeinrichtung
- 3: Empfänger
- 3': Zweiter Empfänger
- 4: Fluid, Flüssigkeit, Gas
- 41: Flussrichtung
- 5: Akustische Oberflächenwelle
- 6: Heißgetränkeautomat, Kaffee- (voll-) Automat
- 60: Getränkebereiter
- 61: Flowmeter
- 62: Flüssigkeitspumpe
- 63: Heizkörper, Durchlauferhitzer
- 64: Ventil
- 65: Brüheinheit
- 66: Gerätesteuerung
- 67: Getränkeauslass, Kaffeeauslass
- 68: Dampfauslass
- 69: Wasserbehälter
- 691: Wasserzuleitungen
- 7: Geschirrspülmaschine
- 71: Spülwasser- Speicherbehälter
- 72: Sammeltopf
- 76: Gerätesteuerung
- 8: Waschmaschine
- 80:
- 81: Laugenbehälter
- 82: Wäschetrommel
- 83: Wäsche
- 84: Einspülkasten
- 85: Wassereinlauf
- 86: Gerätesteuerung
- 861: Antriebsmotor
- 87: Überlaufschutzeinrichtung
- 88: Ablaufeinrichtung
- 89: Ablaufpumpe
- 9: Ablagerung

## Patentansprüche

1. Haushaltsgerät (6, 7, 8), mit einem von einem Fluid (4), insbesondere einer Flüssigkeit, durchflossenen Bereich (10, 101, 102, 103), sowie mit einer Gerätesteuerung (66, 76, 86), die zur Erkennung eines Ablagerungs- charakteristischen Wertes einer Ablagerung (9) ausgebildet ist, die an dem vom Fluid (4) durchflossenen Bereich (10, 101, 102, 103) angeordnet ist, wobei das Haushaltsgerät (1) eine Messeinrichtung (20, 201, 202, 203) umfasst, **dadurch gekennzeichnet, dass**
die Messeinrichtung (20, 201, 202, 203) zur Erfassung des Ablagerungs- charakteristischen Wertes mittels einer akustischen Oberflächenwelle (5) ausgelegt ist.

2. Haushaltsgerät (6, 7, 8) nach Anspruch 1, **dadurch gekennzeichnet, dass** die Messeinrichtung (20, 201, 202, 203) einen Sender (2) zum Anregen der akustischen Oberflächenwelle (5), und zumindest einen Empfänger (3) zum Empfangen der akustischen Oberflächenwelle (5) und/oder ihrer Reflexionen umfasst.

3. Haushaltsgerät (6, 7, 8) nach einem der vorherigen Ansprüche, **dadurch gekennzeichnet, dass** die Messeinrichtung (20, 201, 202, 203) an einer dem Fluid (4) abgewandten Fläche (11) einer Struktur (1) angeordnet ist, die den vom Fluid (4) durchflossenen Bereich (10, 101, 102, 103) fluiddicht begrenzt.

4. Haushaltsgerät (6, 7, 8) nach einem der vorherigen Ansprüche, **dadurch gekennzeichnet, dass** die Gerätesteuerung (66, 76, 86) dazu ausgelegt ist, den vom Fluid (4) durchflossenen Bereich (10, 101, 102, 103) zu reinigen, wenn eine Differenz zwischen einem Referenzwert und dem mit der Messeinrichtung (20, 201, 202, 203) erfassten Ablagerungs- charakteristischen Wert einen Grenzwert überschreitet.

5. Haushaltsgerät (6, 7, 8) nach einem der vorherigen Ansprüche, **dadurch gekennzeichnet, dass** die Gerätesteuerung (66, 76, 86) zur Erkennung eines Schichtdicken- charakteristischer Wertes, insbesondere einer Schichtdicke, der Ablagerung (9) ausgebildet ist.

6. Haushaltsgerät (6, 7, 8) nach einem der vorherigen Ansprüche, **dadurch gekennzeichnet, dass** der Referenzwert ein von der Messeinrichtung (20, 201, 202, 203) erfasster Initialisierungswert ist.

7. Haushaltsgerät (6, 7, 8) nach einem der vorherigen Ansprüche, **dadurch gekennzeichnet, dass** es ein Hinweismittel zum Hinweisen eines Bedieners auf eine notwendige Reinigung umfasst.

8. Haushaltsgerät (6, 7, 8) nach einem der vorherigen Ansprüche, **dadurch gekennzeichnet, dass** es ein (Heiß-) Getränkeautomat (6), eine (Geschirr-) Spülmaschine (7), eine Waschmaschine (8), ein Wäschetrockner, ein Waschtrockner, ein Staubsauger, ein Nassstaubsauger, ein Bügelsystem, Backofen oder Dampfgarer ist.

9. Haushaltsgerät (6, 7, 8) nach einem der vorherigen Ansprüche, **dadurch gekennzeichnet, dass** der vom Fluid durchflossene Bereich (10, 101, 102, 103)
- Bei der Waschmaschine (8) ein Laugenbehälter, eine Ablufteinrichtung oder ein Einspülkasten,
- Bei der Spülmaschine (7) ein Sammeltopf, ein Speicherbehälter oder eine Ablaufeinrichtung,
- Bei dem (Heiß-) Getränkeautomaten (6) ein Wasserbehälter, ein Milchbehälter, ein Leitungssystem, oder ein Boiler, und
- Bei dem Bügelsystem ein Dampferzeuger, insbesondere ein Boiler,
ist.

10. Verfahren zum Reinigen eines Haushaltsgerätes (6, 7, 8) nach einem der vorherigen Ansprüche, bei dem
- Der Ablagerungs- charakteristische Wert auf der Struktur (1) des von dem Fluid (4) durchflossenen Bereiches (10, 101, 102, 103) des Haushaltsgerätes (6, 7, 8) mit der Messeinrichtung (20, 201, 202, 203) erfasst wird, und
- Der von dem Fluid (4) durchflossene Bereich (10, 101, 102, 103) gereinigt wird, wenn eine Differenz zwischen einem Referenzwert und dem mit der Messeinrichtung (20, 201, 202, 203) erfassten Ablagerungs- charakteristischen Wert einen Grenzwert überschreitet.

11. Verfahren nach Anspruch 11, **dadurch gekennzeichnet, dass** die Messeinrichtung (20, 201, 202, 203) den Ablagerungs- charakteristische Wert
- in definierten zeitlichen Abständen, und/oder
- in Abhängigkeit von der Häufigkeit der Benutzung des Haushaltsgerätes (6, 7, 8), und/oder
- in Abhängigkeit von einer Betriebsdauer des Haushaltsgerätes (6, 7, 8)
erfasst.

12. Verwendung von akustischen Oberflächenwellen (5) zur Erfassung von Ablagerungen (9) eines von einem Fluid (4) durchflossenen Bereiches (10, 101, 102, 103) in einem Haushaltsgerät (6, 7, 8).
